# EUROPEAN PATENT APPLICATION

(11) **EP 1 564 163 A1**
(43) Date of publication of application: **17.08.2005**
(21) Application number: 05002492.6
(22) Date of filing: 07.02.2005
(51) Int. Cl.: B65G 19/02, B65G 47/84, B65G 19/26, B65G 47/52

(54) **Conveyor for feeding products, provided with a device for varying the spacing of the conveyed products**

(30) Priority: 11.02.2004 IT BO20040062
(71) Applicant: Ratec S.r.l., 40069 Zola Predosa (Prov. of Bologna) (IT)
(72) Inventor: Risi, Roberto, 40033 Casalecchio di Reno (IT)
(74) Representative: Modiano, Guido, Dr.-Ing.

(57) **Abstract**

A conveyor for feeding products (B), provided with means for the advancement of the products along a conveyance surface (19), the advancement means being constituted by elements that are supported at a mutually identical distance on the conveyor (1) and comprise active elements (34-39) that lie above the conveyance surface (19) and are suitable to act on the products (B) in the advancement direction (C), the active elements being controlled by actuation means (29) such as to determine, along at least one portion of the conveyor, the movement of each active element with respect to the elements that precede it and follow it, so as to vary the distance between the containers during their advancement.

## Description

The present invention relates to a conveyor for feeding products, provided with a device for varying the distance between the conveyed products. Hereinafter, this distance is also termed spacing.

Packaging systems are already known in which suitable conveyors are used to transfer the products from one processing station to the next and feed the products with a constant spacing. For example, in bottling lines the conveyor is provided with pushers that produce the advancement of the mutually equidistant products along an advancement surface to then transfer them into, and receive them from, the processing stations arranged along the advancement path, where the containers are subjected to the intended packaging steps, such as filling, labeling and capping.

Known systems have the drawback of being scarcely or not at all flexible in relation to the possibility of adapting them to feeding products having a different format, particularly having different dimensions. Changing the parameters of the format in fact requires adaptations of the conditions of insertion of the products in the processing stations that have already been prepared for previous requirements. For example, conveyors are known which feed the products with a constant spacing that is equal to the spacing of the machine arranged upstream of said conveyor, which by means of a worm screw (screw feeder) can be increased or decreased to the spacing of the processing machine arranged downstream of the line, and the same applies to all the machines that compose the system.

It is also noted that in bottling lines the machines that compose the layout of the line are supplied by different manufacturers and accordingly the spacings of said machines are mutually different. The result is that every time the format is changed it is necessary to replace the worm screw that is designed to adapt the spacing of the pushers to the spacing of the machine that must receive the products. The transfer of the products from the pushers to the worm screw, however, does not ensure immediate restart of each machine, but requires adjustment on the path of highly specialized personnel, with very long downtimes caused by the change of format of the products on all the processing machines of the line.

Another known system is the one in which the processing machines (such as filling machines, capping machines, labeling machines, routing machines) are manufactured with an identical spacing. However, this solution has considerable limitations as regards the working formats, due to the length of the labels applied by the labeling machine.

The aim of the present invention is to provide a conveyor that is capable of obviating the drawbacks noted above in known conveyors.

Within this aim, an object of the present invention is to provide a conveyor that is structurally simple and capable of ensuring reliability and versatility in operation.

This aim and this and other objects that will become better apparent hereinafter are achieved with a conveyor for feeding products, provided with means for the advancement of said products along a conveyance surface, characterized in that said advancement means are constituted by elements that are supported at a mutually identical distance on said conveyor and comprise active means that lie above said conveyance surface and are suitable to act on said products in the advancement direction, said active means being controlled by actuation means that determine, along at least one portion of said conveyor, the movement of each active means with respect to the means that precede it and follow it, so as to vary the distance between the containers during their advancement.

Further characteristics and advantages of the present invention will become better apparent from the description that follows of a preferred embodiment thereof, illustrated by way of non-limiting example in the accompanying drawings, wherein:
Figure 1 is a schematic side elevation view of a portion of a system for conveying containers;
Figure 2 is a transverse sectional view, taken along the line II-II of Figure 1;
Figure 3 is a transverse sectional view, taken along the line III-III of Figure 1.

With reference to the figures, the system comprises a first conveyor, generally designated by the reference numeral 1, which is coupled in a linear manner to a second conveyor, generally designated by the reference numeral 2.

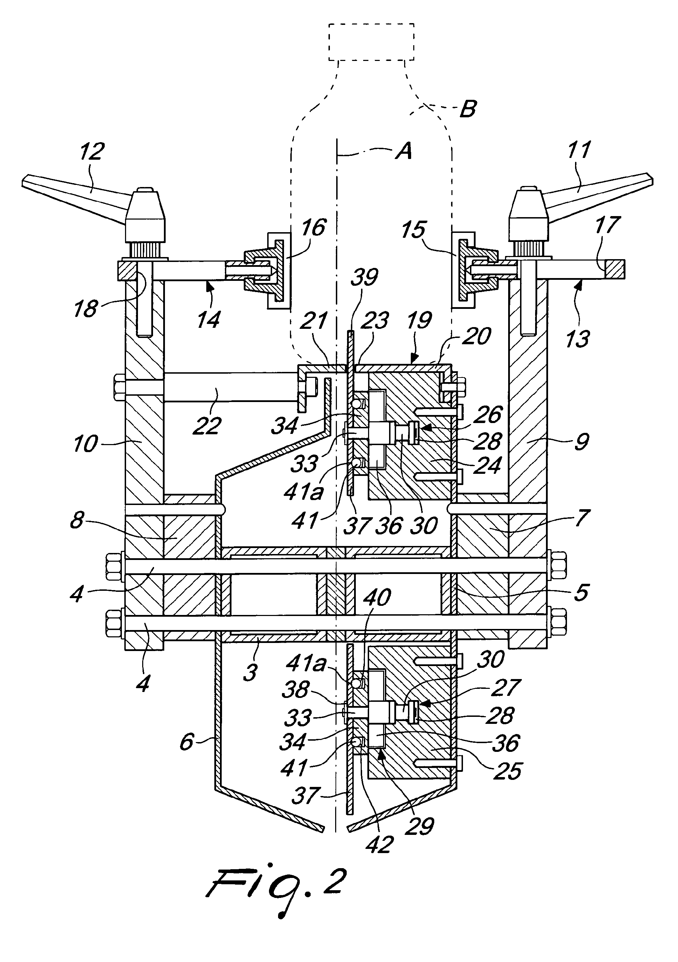

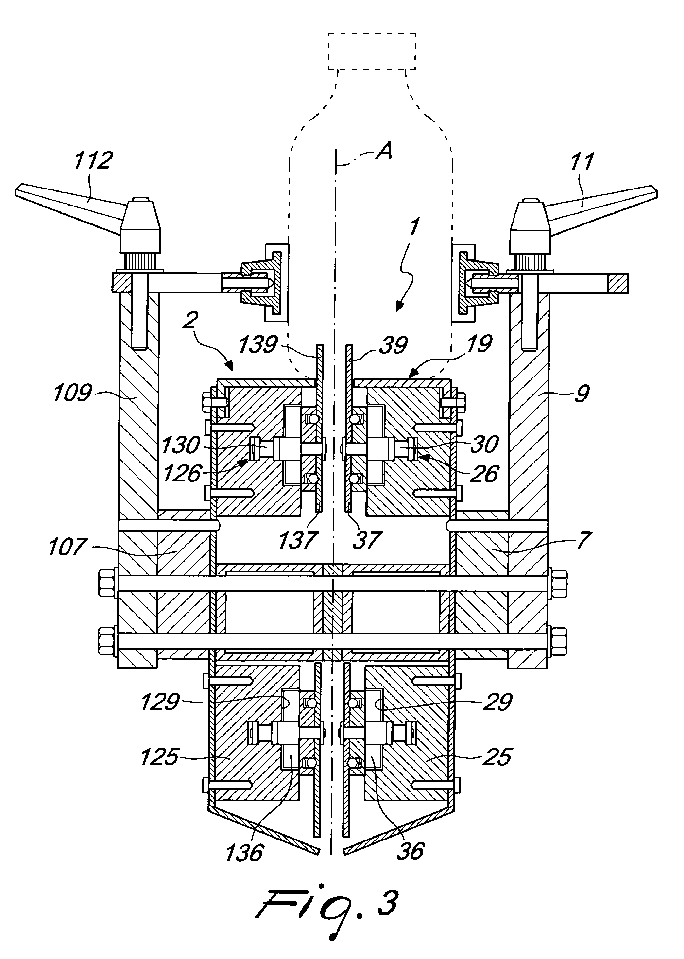

As shown more clearly in Figures 2 and 3, the conveyor 1 comprises a framework, which is composed by way of example of tubular longitudinal elements 3 that have a quadrangular cross-section and with which two side walls 5, 6 are rigidly coupled by means of transverse through bolts 4.

The bolts 4, with the interposition of blocks 7, 8, further fix to the longitudinal members 3 respective posts 9, 10, to the top of which respective arms 13, 14 are fixed detachably by means of handwheels 11, 12 provided with threaded stems that engage the posts 9, 10, such arms protruding toward an imaginary centerline plane A, which is interposed vertically between the conveyors 1, 2.

Respective profiled elements 15, 16 are fixed to the ends of the arms 13, 14 that protrude toward the plane A and act as guiding shoulders for the products to be conveyed, which in the example being considered are constituted by containers B that are substantially cylindrical but can have a different shape: square, rectangular, oval and so forth.

Elongated slots 17, 18 are formed in the arms 13, 14 in order to allow the arms to slide transversely and thus adjust the mutual position of the shoulders 15, 16 also with respect to the centerline plane A.

The containers B rest on a sliding surface 19, which is provided by means of two profiled elements 20, 21, which have an L-shaped cross-section and are fixed respectively to the top of the wall 5 and to additional arms 22, which are fixed in a cantilever manner to the posts 10. The two profiled elements 20, 21 comprise respective portions that are flat and mutually coplanar and form a longitudinal slot 23 through which the active elements of the device, intended for the advancement of the containers B along the surface 19, advance.

Two bars 24, 25 having a rectangular cross-section are rigidly coupled to the internal face of the side wall 5, lie above and below the longitudinal members 3, and are provided with respective grooves 26, 27, which are open toward the centerline plane A.

The grooves 26, 27 have a substantially T-shaped cross-section, which is composed of an internal channel 28, which is connected longitudinally to an external channel 29 that has a larger cross-section than the internal channel and faces the centerline plane A.

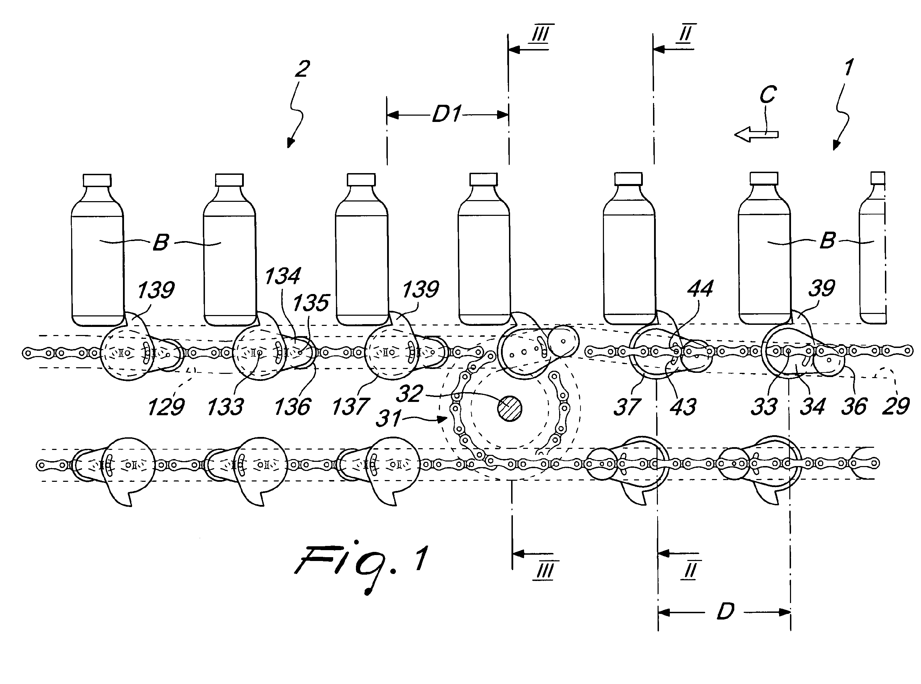

The internal channel 28 of the grooves 26, 27 acts as a sliding track for a chain 30, which is closed in a loop around a pair of sprockets, which are keyed on respective shafts arranged at the opposite ends of the bars 24, 25 and have a diameter that is substantially equal to the distance between the outlets of the channels 26, 27 of the bars 24, 25. Figure 1 shows schematically only one of the sprockets, designated by the reference numeral 31 and keyed on a shaft 32, which can rotate within supports of the framework of the conveyors. The sprockets are turned by motor means, not shown, which are suitable to impart to the upper portion of the chain 30 an advancement in the direction C.

A plurality of pivots 33 for the articulation of the links of the chain 30, arranged at equal distances (hereinafter termed nominal spacing D), lie transversely through the channels 28 and 29 toward the centerline plane A, and each of the pivots 33 articulately supports a lever 34, which is constituted in practice by a plate that is elongated radially with respect to the pivot 33, so as to form a sort of arm at the end of which a wheel 36 is supported rotatably by means of a pivot 35.

A flat sector 37 is articulately associated with the lever 34 on the same pivot 33, lies on the plane of the longitudinal slot 23, and is retained adjacent to the lever 34 by a split pin 38. The sector 37 has a radial extension whose length is such as to form a tooth 39 that protrudes from the advancement surface 19 through the slot 23 in order to be able to act as a pusher for the containers B.

In the lever 34, in angularly offset positions, there are two seats 40, each of which accommodates a ball 41 that is pushed by a spring 42. The springs 42 actuate the respective balls 41 so that they engage in notches 41 a of the sector 37, producing a detachable connection (of the clutch or torque-limiting type) of the lever 34 with the sector 37, so that the sector 37 can be turned by the lever 34 when said lever performs oscillating movements. The breadth of the oscillating movements of the sector 37 is determined by the angular position of the notches 41a and of the balls 41 with respect to the pivot 33. In any case, the maximum oscillation of the sectors 37 is comprised in an angle formed by a circular slot 43 that is concentric with respect to the pivot 33 and is engaged by the second pivot 44 of the same link of the chain that is articulated by the pivot 33.

The oscillating movements of the levers 34 are actuated by a linear cam, which is formed by the shape of the channel 29 followed by the wheels 36 along the upper portion of the conveyor 1 that lies directly below the advancement surface 19.

The operation of the conveyor 1 can be understood easily from what has been described above. During the normal advancement of the chain 30 in the direction C, the containers B are engaged by the pushers 39 and moved in the advancement direction C along the surface 19. The wheels 36, following the shape of the channel 29, force the levers 34 to perform a clockwise or counterclockwise angular stroke that determines, by way of the engagement of the balls 41 in the notches 41a or by friction, the equally orientated traction of the sectors 37 around the respective pivots 33. Accordingly, the teeth 39 undergo, with respect to a reference position, an oscillating forward or backward displacement in the advancement direction C of the conveyor, which causes an elongation and respectively a shortening of the nominal spacing D between the containers B on which the teeth 39 act until the breadth D 1 is reached.

As it is evident, with this changed spacing D1, the containers B can be transferred onto the conveyor 2, which in turn, depending on requirements, can provide a further correction or can restore the nominal spacing.

In the illustrated example, the conveyors 1 and 2 have a structure that is substantially mirror-symmetrical with respect to the centerline plane A, and in Figures 1 and 3, for the sake of brevity in description, the parts or elements that constitute the conveyor 2 have been designated by the same reference numerals as the conveyor 2 increased by 100.

Accordingly, the described invention achieves the intended aim and object. In particular, it is noted that the conveyor 1 can be associated with a station in which the insertion of the products in the processing cycle requires a spacing that is different from the spacing with which the products are fed, for example in a labeling machine, capping machine, filling machine and so forth.

An advantage of the invention is the detachable connection of the sectors 37 to the levers 34. This allows the sectors 37 to tilt backward if, during the advancement of the conveyor, the containers B face an obstacle that is capable of stopping them or in some way damaging them.

In its practical embodiment, the invention is susceptible of numerous modifications and variations, all of which are within the scope of the appended claims.

The disclosures in Italian Patent Application No. BO2004A000062 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A conveyor for feeding products (B), provided with means for the advancement of said products along a conveyance surface (19), **characterized in that** said advancement means are constituted by elements that are supported at a mutually identical distance on said conveyor (1) and comprise active elements (34-39) that lie above said conveyance surface (19) and are suitable to act on said products (B) in the advancement direction (C), said active elements being controlled by actuation means (29) such as to determine, along at least one portion of said conveyor, the movement of each active element with respect to the elements that precede it and follow it, so as to vary the distance between the containers during their advancement.

2. The conveyor according to claim 1, **characterized in that** it comprises a supporting framework (3) for a flexible element (30), which lies in a closed loop and is provided with a horizontal upper portion, a sliding surface (19) for the products (B) to be transferred, which lies above said portion and is provided with a longitudinal slot (23), through which the active elements (34-39) for the advancement of the containers and fitted on said flexible element advance, a groove (26), which runs parallel to said upper portion and comprises a first channel (28) for the sliding of said flexible element, which is blended laterally with a second channel (29), which constitutes a linear cam, said active elements being constituted by lever elements (34), which are articulated at identical distances on said flexible element and comprising a first portion (36), which engages said cam-like channel (29), and a second portion (39), which runs through said slot (23) and acts as a pusher for said products, said cam-like channel being shaped so as to produce a preset angular movement of said second portion in the advancement direction of said products.

3. The conveyor according to claim 2, **characterized in that** said flexible element is constituted by a chain (30), which can slide in said first channel (28) and is provided with a plurality of mutually equidistant pivots (33), and **in that** said lever elements (34) are each constituted by a plate (24), which is articulated about a respective pivot (33) and is elongated radially with respect to said pivot so as to form a sort of arm in which the end (36) engages slidingly in said cam-shaped channel (29), a sector (37) being associated with said plate on the same articulation pivot, lying on the plane of said longitudinal slot (23) of the conveyance surface, and being detachably coupled to said plate, said sector having a radial extension (39) that protrudes from the sliding surface through said slot and acts as a pusher for the products to be fed.

4. The conveyor according to claim 3, **characterized in that** said sector (37) is articulately coupled to said plate by way of clutch means (41) or torque-limiting means.

5. The conveyor according to one of claims 3 and 4, **characterized in that** said coupling means are constituted by two angularly offset receptacles (40), which are formed in said plate (24) and accommodate respective balls (41) pushed by springs (42) against said sectors, so as to engage notches (41a) formed in said sectors and produce a clutch or torque-limiting coupling between said plates and said sectors.

6. The conveyor according to one of claims 2 to 5, **characterized in that** said channels (28, 29) are formed in bars (24, 25) of the framework that lie below said conveyance surface (19).

7. The conveyor according to one of claims 3 to 6, **characterized in that** said arm of said articulated plate (24) is provided, at its end, with a wheel (36) that slidingly engages said cam-shaped channel (29).

8. The conveyor according to one of the preceding claims, **characterized in that** it is coupled in a linear fashion to a second conveyor (2), which is substantially identical and arranged mirror-symmetrically with respect to a centerline plane (A) that passes through said longitudinal slot (23) for the advancement of said pushers.
